# EUROPEAN PATENT SPECIFICATION

(11) **EP 2 895 293 B1**
(45) Date of publication and mention of the grant of the patent: **01.04.2020**
(21) Application number: 13834342.1
(22) Date of filing: 12.08.2013
(51) Int. Cl.: B23K 26/03, B23K 26/34, B05B 7/22, C23C 24/10

(54) **LASER CLADDING SYSTEM FILLER MATERIAL DISTRIBUTION APPARATUS**
VORRICHTUNG ZUR FÜLLMATERIALVERTEILUNG FÜR EIN LASERAUFTRAGSCHWEISSSYSTEM
APPAREIL DE DISTRIBUTION DE MATIÈRE DE CHARGE DE SYSTÈME DE GAINAGE LASER

(30) Priority: 12.09.2012 US 201213611144
(43) Date of publication of application: 22.07.2015
(73) Proprietor: Siemens Energy, Inc., Orlando, FL 32826-2399 (US)
(72) Inventor: BRUCK, Gerald J., Oviedo, Florida 32766 (US)
(74) Representative: Maier, Daniel Oliver
(86) International application number: PCT/US2013/054453
(87) International publication number: WO 2014/074188

(56) References cited:
- EP-A1- 2 343 148
- WO-A1-2012/109086
- JP-A- 2007 029 977
- US-A- 4 625 095
- US-A1- 2009 280 269
- US-A1- 2010 034 647
- US-A1- 2010 078 411

## Description

### FIELD OF THE INVENTION

The present invention relates to an apparatus for laser cladding filler material distribution.

The invention finds application in the laser cladding of superalloy components, such as service-degraded turbine blades and vanes. The present invention may be used to weld one or more filler material layers to substrates along continuous weld translation paths. Filler material, such as metal powder, may be introduced in a pattern on the substrate by a filler distribution apparatus having a linear or polygonal array of dispensing apertures for uniform distribution in advance of or during a laser beam transferring optical energy to the substrate along the continuous weld translation path.

### BACKGROUND OF THE INVENTION

"Structural" repair of gas turbine or other superalloy components is commonly recognized as replacing damaged material with matching alloy material and achieving properties, such as strength, that are close to the original manufacture component specifications (e.g., at least seventy percent ultimate tensile strength of the original specification). For example, it is preferable to perform structural repairs on turbine blades that have experienced surface cracks, so that risk of further cracking is reduced, and the blades are restored to original material structural and dimensional specifications.

Repair of nickel and cobalt based superalloy material that is used to manufacture turbine components, such as turbine blades, is challenging, due to the metallurgic properties of the finished blade material. The finished turbine blade alloys are typically strengthened during post casting heat treatments, which render them difficult to perform subsequent structural welding. For example a superalloy having more than 6% aggregate aluminum or titanium content, such as CM247 alloy, is more susceptible to strain age cracking when subjected to high-temperature welding than a lower aluminum-titanium content X-750 superalloy.

Currently used welding processes for superalloy fabrication or repair generally involve substantial melting of the substrate adjoining the weld preparation, and complete melting of the welding rod or other filler material added. When a blade constructed of such a material is welded with filler metal of the same or similar alloy, the blade is susceptible to solidification (aka liquation) cracking within and proximate to the weld, and/or strain age (aka reheat) cracking during subsequent heat treatment processes intended to restore the superalloy original strength and other material properties comparable to a new component.

One known superalloy joining and repair method that attempts to melt superalloy filler material without thermally degrading the underlying superalloy substrate is laser beam welding, also known as laser beam micro cladding. Superalloy filler material (often powdered filler) compatible with or identical to the superalloy substrate material is pre-positioned on a substrate surface prior to welding or sprayed on the surface with pressurized gas through a channel during the cladding process. A "spot" area of focused laser optical energy generated by a fixed-optic laser (i.e., other than relative translation, laser and substrate have a fixed relative orientation during laser beam application) liquefies the filler material and heats the substrate surface sufficiently to facilitate good coalescence of the filler and substrate material, that subsequently solidify as a clad deposit layer on the substrate surface. Compared to other known traditional welding processes, laser beam micro-cladding is a lower heat input process, with relatively good control over melting of the substrate and rapid solidification that reduce propensity to cause previously-described solidification cracking. Lower heat input to the superalloy substrate during laser welding/cladding also minimizes residual stresses that otherwise would be susceptible to previously described post-weld heat treatment strain age cracking. While laser cladding welds have structural advantages over traditionally-formed welds, practical manufacturing and repair realities require larger cladding surface area and/or volume coverage than can be filled by any single pass applied cladding deposit.

To meet needs for adding volume to superalloy components, a laser-cladded deposit on a substrate can be formed from single- or two-dimensional arrays of adjoining solidified clad passes. Multiple laser-welded cladding passes and layers can be applied to build surface dimensional volume. Creating arrays of laser-clad deposits often results in microcracks and defects in the deposited material and underlying substrate in the heat affected zone material. Some defects are related to lack of fusion (LoF) that is common when there is insufficient localized laser optical energy heat input. Often a substrate, such as a turbine blade, requires structural repair filling of a missing volume of the blade substrate material with an equivalent volume of superalloy filler, in order to restore the blade's original structural dimensions. In known laser cladding techniques the missing blade substrate volume is filled with a two-dimensional filler weld array of individually-applied laser clad deposits or passes. The laser beam focus position and substrate surface are moved relative to each other after a single deposit formation to weld the next deposit, analogous to a series of abutting, overlapping bumps or dots. With known multi-dimensional filler material depositing equipment, either a layer of the filler particles (often in powder form) are prepositioned in a layer on the substrate surface or directed through a pressurized gas-fed nozzle over the laser "spot" projected location. While US 2010/0078411 A1 describes a mechanical auger-fed powder feed cylinder that distributes cladding filler powder through a single nozzle, single point distribution is not optimal for multi-dimensional filler material distribution applications.

With known single deposit "spot" laser cladding methods a weld array of deposits often exhibits lack of fusion (LoF) at corners of every weld pass. The LoF is caused by combinations of one or more of localized variations in the blade substrate surface topology that require corresponding variations in laser optical energy transfer in order to maintain desired fusion, including: asymmetric heat sink properties; diminished power density; and surface reflectivity of both optical energy and powder. For example, a previously applied solidified laser-clad deposit has a curved surface bounded an edge that is in contact with the substrate surface. That previously applied deposit represents additional heat sink material that must be heated along with underlying substrate when the next laser-clad deposit is formed in abutting relationship to create a continuous weld line. Additionally, the curvature of the prior deposit spreads the laser beam energy transfer of the next adjoining deposit and reduces localized power density (e.g., watts per unit area). Potentially the curved surface also changes localized laser optical reflectivity, which may be compounded by non-uniform filler powder distribution, e.g., scattering away from the curved surface, adding additional reflectivity variance.

When the next laser cladding deposit is applied in adjoining, overlapping relationship with the existing deposit, a common uniformly applied power and/or filler powder distribution across the new laser focus zone would not apply sufficient localized fusion energy, causing a poorer than desired weld in the overlapping region between the prior and new deposits. An overall uniform increase in applied heat energy by the laser when forming deposits, in order to compensate for "worst case" lack of fusion in the overlapping regions of prior and new deposits, is more than required for good fusion of the bare substrate abutting the prior deposit edge along the weld line. This results in over-melting, over-heating and over-stressing of the crack sensitive substrate material, which may unnecessarily instigate subsequent hot cracking and/or strain age cracking.

It is often desirable to build superalloy material dimensional volume in a newly fabricated or repaired service-degraded superalloy component, such as a turbine blade or vane. When known laser cladding methods are employed multiple pass layers are applied over previously deposited multiple pass layers to create the needed built up volume. Laser microcladding with fixed optics requires multiple passes to accomplish a typical repair buildup because the size of overall area to be repaired is large relative to the beam diameter at focus. Each pass overlap involves a challenge in ensuring that full fusion is achieved within each built-up layer and that full fusion is achieved with the previously-applied underlying layer. Typically in known fixed optic laser cladding processes weld solidification crystal alignment tends to shift from perpendicular to the substrate in the first few applied layers and then tends to shift at an increasingly skewed angle in subsequently applied clad layers. Microcracking often initiates upon such shifts in the inter-layer crystallographic orientation.

US 2014/0072438 A1 describes laser welding/cladding that solves the shortcomings of known serial deposit laser cladding processes for welding of superalloy substrates, such as a turbine blades or vanes, which clad one or more layers on the substrate for structurally building up surface area and/or volume with superalloy filler material. In US 2014/0072438 A1, sufficient laser optical energy is transferred to the welding filler material and underlying substrate to assure filler melting and adequate substrate surface wetting for good fusion. However, energy transfer is maintained below a level that jeopardizes substrate thermal degradation. Optical energy transfer to the filler and substrate is maintained uniformly as the laser beam and substrate are moved relative to each other along a translation path by varying the energy transfer rate to compensate for localized substrate topology variations. In this way a continuous weld cladding layer is formed of uniform consistency-rather than the previously known technique of forming a series of aligned, overlapping individual cladding deposits. For example, the optical energy transfer rate is increased for relatively more reflective or curved zones that do not absorb the laser's optical energy as efficiently as relatively non-reflective or flat zones. Energy transfer rate can be varied, for example by oscillating the laser beam transverse to the translation movement path, varying its movement and/or oscillation velocity, changing laser beam focus to narrower or wider beam, or changing the laser beam power output. The laser beam may be rastered in one-, two- or three dimensions to build a continuous cladding layer. When multiple cladding layers are applied on each other, using the methods of US 2014/0072438 A1, uniaxial crystallographic orientation generally perpendicular to the substrate is maintained in the clad buildup. Uniaxial orientation reduces likelihood of microcracking that often occurs when cladding multiple multipass layers using known fixed optic laser welding techniques.

When practicing the multi-dimensional continuous laser cladding methods of US 2014/0072438 A1, a challenge remains how to predeposit or feed filler material in advance of or in conjunction with the continuous laser beam path over a multi-dimensional surface area. As previously noted, known multi-dimensional cladding filler material depositing methods include prepositioning a layer of filler over the entire substrate surface prior to the welding/cladding laser exposure or transfer of filler material through a channel under gas pressure before and/or during the laser exposure. In both known multi-dimensional filler material distribution methods inert gas is separately applied to the substrate surface to prevent oxidation of the filler material and/or substrate during the cladding process. In channel-applied material distribution apparatus the inert gas also transports filler material through the channel. Inert gas flow tends to disrupt pre-deposited filler material (often powder) thickness on the substrate. Pressurized inert gas applied filler material does not distribute evenly on the substrate surface and is of limited efficiency - with powder wastage of 40% or more. When practicing the known serial individual deposit cladding methods, variations in filler material layer thickness could be corrected prior to applying the laser beam to generate the next cladding deposit.

While either of these known depositing methods were adequate for previously known serial deposit cladding, neither is optimal for the multi-dimensional continuous laser cladding methods of US 2014/0072438 A1. Both of the known filler material depositing methods risk non-uniform application-and possibly disruption--of the cladding material layer uniform distribution on the substrate surface by the time the continuously moving laser beam travels along the welding path. In the case of pre-deposited filler powder, inert gas and atmospheric currents can disrupt the filler material layer thickness. Pressurized gas channel application of filler does not lead to uniform filler thickness over a wide area. Deviations in cladding material layer thickness create localized topology changes for application of the laser beam power. While laser power variation feedback mechanisms may be employed by the cladding apparatus, it is preferable to start with a relatively uniform filler material application layer that remains unchanged during the laser welding operation.

The less than optimal ability of known pressurized gas delivery filler material distribution method and apparatus to deliver uniform layers of filler material is often attributable to their uniaxial delivery limitations. Most known pressurized gas delivery systems are uniaxial, i.e., deliver material as a point source spray pattern that is customarily oriented coaxial with the laser beam or on an axis that delivers material sideways relative to the beam. Uniaxial delivery does not provide for spreading of filler material (often powder) uniformly across a wide area. Gas-assisted delivery often scatters filler powder indiscriminately outside of the intended welding area. The expensive superalloy scattered filler powder is wasted and is not effectively reclaimed for future welding.

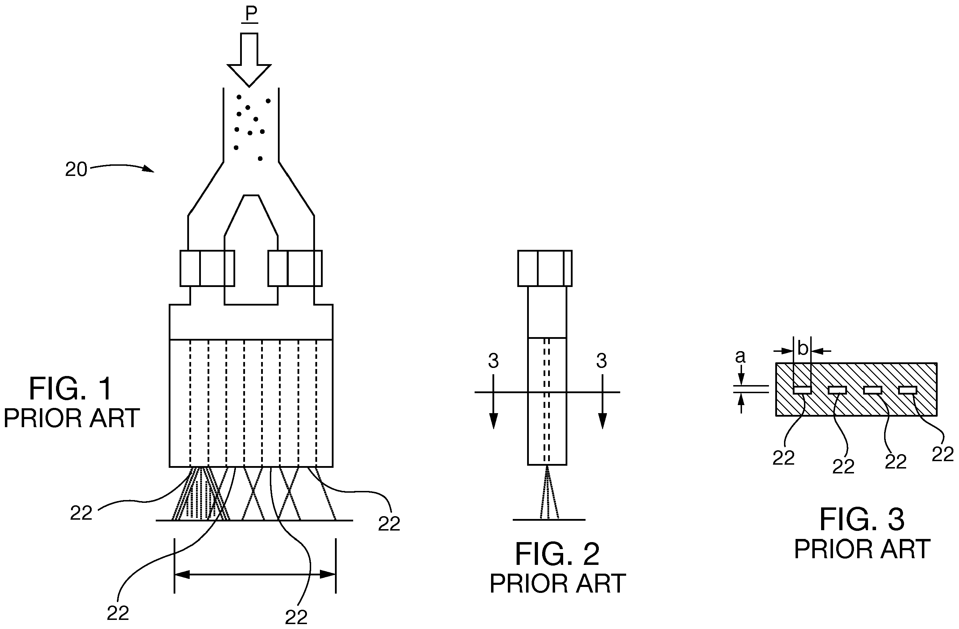

Some known pressurized filler material powder delivery systems are capable of delivering a linear pattern of filler. An exemplary known prior art pressurized linear pattern delivery system 20 is shown in FIGs. 1-3. The delivery system 20 delivers filler material that is entrained in a pressurized gas stream P via a linear array of channels 22. The array width of channels 22 is fixed and therefore the filler material distribution width is also fixed. Each individual channel 22 has a fixed cross-sectional area, having dimensions a x b, which limits the system 20 maximum feed rate. The delivery P feed rate is a function of the channel 22 cross-section and the delivery gas pressure. Usually the gas delivery pressure is fixed. To the extent that gas pressure can be adjusted, increases in pressure to increase feed rate can result in turbulent gas flow that disrupts powder distribution and in extreme cases lead to powder clumping during delivery.

Thus, a need exists in the art for a laser cladding filler material distribution apparatus that is capable of applying a relatively uniform filler material thickness over a multi-dimensional surface area of a substrate prior to or during application of a cladding deposit: whether a series of individual deposits using known laser cladding techniques or whether a continuous multi-dimensional deposit weld over a weld path of the laser cladding methods of US 2014/0072438 A1.

Another need exists in the art for a laser cladding filler material distribution apparatus, with operational flexibility for varied applications, that is capable of applying a selectively varied, relatively uniform filler material thickness over a selectively varied multi-dimensional surface area of a substrate prior to or during application of a cladding deposit, with selectively variable feed rates, so that the distribution apparatus can accommodate different weld path dimensions.

An additional need exists in the art for a laser cladding filler material distribution apparatus that can be integrated with or whose filler material distribution pattern can be coordinated with a laser cladding apparatus, so that a uniform layer of filler material is applied to a desired surface area of a substrate prior to or during arrival of a cladding laser beam along a serial deposit or a continuous welding path.

WO 2012/109086 A1 discloses a powder delivery apparatus according to the preamble of claim 1, for delivering powdered cladding material into the vicinity of a laser beam spot. The apparatus includes a plurality of powder delivery modules. Each of the modules is arranged to receive the cladding material and deliver the cladding material through a plurality of nozzles. The position of the nozzles in the modules with respect to the laser beam spot is adjustable in three Cartesian axes. The modules are selectively removable from, and attachable to the apparatus. Nozzles in any one of the modules can be selectively prevented from delivering cladding material.

### SUMMARY OF THE INVENTION

The present invention is specified in claim 1 of the following set of claims.

Preferred features of the present invention are specified in claims 2 to 6 of the set of claims.

### BRIEF DESCRIPTION OF THE DRAWINGS

The present invention can be readily understood by considering the following detailed description of the invention in conjunction with the accompanying drawings, in which:
FIG. 1 is a front elevational schematic view of a known gas assisted filler material powder distribution system;
FIG. 2 is a side elevational view of the known distribution system of FIG. 1;
FIG. 3 is a cross sectional view of the known distribution system of FIG. 2, taken along 3-3;
FIG. 4 is a schematic view of a filler material distribution apparatus in accordance with the present invention incorporated in a laser beam welding system;
FIG. 5 is a schematic view of an exemplary multi-layer laser weld rastering pattern of the laser beam welding system of FIG. 4;
FIG. 6 is a schematic end elevational view of the filler material distribution apparatus of FIG. 4 distributing filler material on a substrate in advance of the laser beam rastering pattern welding path;
FIG. 7 is a schematic top plan view of the filler material distribution apparatus of FIG. 4 distributing filler material on a substrate in advance of the laser beam rastering pattern welding path;
FIG. 8 is an axial cross sectional view of the filler material distribution apparatus of FIG. 4 distributing filler material across a substrate surface area in advance of the laser beam rastering pattern welding path first width;
FIG. 9 is an axial cross sectional view of the filler material distribution apparatus of FIG. 4 distributing filler material across a substrate surface area in advance of the laser beam rastering pattern welding path second narrower width than the first width shown in FIG. 8;
FIG. 10 is a partial cross sectional view of another filler material distribution apparatus in accordance with the present invention, having selectively variable-sized distribution apertures;
FIG. 11 is a partial cross sectional front elevational view of a filler material distribution apparatus having reconfigurable modules for selectively varying the distribution aperture array (note, the apparatus of FIG. 11 is not in accordance with the present invention but provides context for the present invention); and
FIG. 12 is a partial cross sectional side elevational view of the filler material distribution apparatus of FIG. 11.

To facilitate understanding, identical reference numerals have been used, where possible, to designate identical elements that are common to the figures.

### DETAILED DESCRIPTION OF THE INVENTION

After considering the following description, those skilled in the art will clearly realize that laser cladding filler material distribution apparatus in accordance with the present invention are capable of selectively varying multi-dimensional distribution patterns to accommodate multi-dimensional laser welding paths. The distribution apparatus of the present invention facilitates uniform distribution of filler material across a welding pattern path: whether a series of serially deposited welds generated by known cladding systems and methods or multi-dimensional rastered continuous weld patterns that are performed by the welding system and methods in US 2014/0072438 A1. In exemplary embodiments of the present invention filler material (often in powder form) is introduced in a pattern on a substrate by a filler distribution apparatus having a linear or polygonal array of dispensing distribution apertures for uniform distribution in advance of or in conjunction with a laser beam transferring optical energy to the substrate. The distribution apparatus includes a housing that defines the distribution aperture array and an internal chamber in communication with the apertures that is adapted for retention of filler material. A mechanical feed mechanism comprising an auger is adapted for feeding filler material from the internal chamber through the distribution apertures without (or with limited amounts of) pressurized gas that might otherwise cause filler clumping and other non-uniform material distribution. A feed mechanism drive system is coupled to the mechanical feed mechanism, adapted for selectively varying filler material feed rate. The aperture array is capable of being selectively reconfigured to vary selectively the filler material distribution pattern.

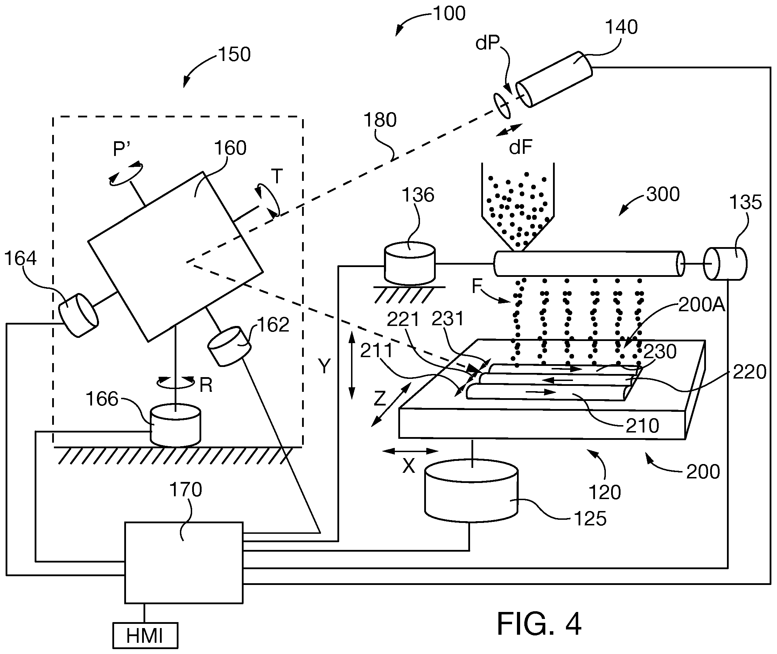

FIG. 4 shows a filler material distribution apparatus in accordance with the present invention incorporated in a continuous path weld laser cladding system of the type disclosed in US 2014/0072438 A1. The cladding system 100 includes a work table 120 to which is affixed a work piece substrate 200, such as a superalloy material turbine blade or vane. Optional work table motion control system 125 is used to move the work table 120 in the X, Y and Z coordinates shown or in any other single- or multi-axis coordinate system. A filler material distribution apparatus 300 in accordance with the present invention introduces powdered filler material that is suitable for welding the substrate 200 surface 200A in a multi-dimensional (here two-dimensional) pattern to match the raster pattern of the welding system 100. For example, if the substrate is a superalloy the filler material is often a powder of the same or compatible alloy. The distribution apparatus 300 filler material feed rate is controlled by a filler drive system 135 that may be an electric motor drive. The distribution apparatus 300 may have its own independent motion control system 136 for moving the poured filler material powder application zones relative to the substrate 200. Construction of the filler material distribution apparatus 300 will be described in greater detail following the laser cladding system 100 general system description.

The system 100 has a laser 140 with optional variable focus dF or power output dP that provides the laser beam optical energy source for heating the substrate 200 surface 200A and filler material F. The system 100 also has a moveable mirror system 150 with mirror 160 that is capable of single- or multi-axis movement, shown as tilt T, pan P and rotate R axes under control of respective drives 162, 164 and 166. The drives 162, 164 and 166 may be part of a known construction motorized motion control system or incorporated in a known galvanometer, that are under control of known controller 170. Alternately the beam may be intercepted by multiple mirrors with single (or multiple) axes of motion to achieve each of the afore-described axes movements.

The controller 170 may be a stand-alone controller, programmable logic controller or personal computer. The controller 170 also controls the work table motion control system 125, the powdered filler material distribution apparatus drive 135, the optional powdered filler material distribution apparatus drive motion control system 136, the laser 140 variable focus dF, and the laser 140 power output dP. Known open and/or closed feedback loops with the controller 170 may be associated with one or more of the drives 125, 135, 136, 162-166, dF, dP. Laser beam optical energy transfer to the substrate and filler can also be monitored in a closed feedback loop so that the controller can vary the energy transfer rate based on the monitored energy transfer rate. A human machine interface (HMI) may be coupled to the controller 170 for monitoring welding operations and/or providing instructions for performing a welding operation.

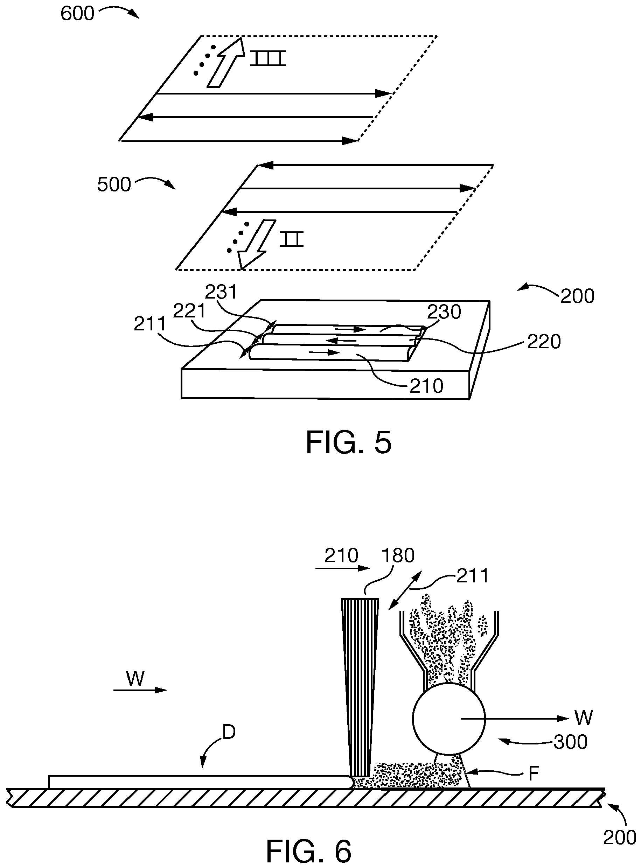

When operating the welding system 100 the output beam 180 of the laser 140 is reflected off mirror 160 (or multiple mirrors) and in turn on to the turbine blade work piece, which transfers optical energy to the substrate 200 and filler material. Both the substrate 200 and filler material absorb the transferred optical energy, to melt the filler material, wet the substrate surface 200A and fuse the melted filler and substrate surface to each other. Referring to FIGs. 4 and 5, the substrate 200 and laser beam 180 are moved relative to each other along a translation path by control of the work table drive system 125 and/or the moveable mirror system 150 drives 162, 164, 166, to form a continuous welded cladding layer 200'. When the movable mirror system 150 is incorporated in a commercially available laser galvanometer system, relative motion between the substrate 200 and the laser beam 180 as well as the laser optical energy transfer rate can be varied by moving the galvanometer mirror 160 (or multiple mirrors) for both relative translation and oscillation. Relative motion between the laser beam 180 and the substrate 200/filler material maintains a continuous melted weld line at the leading edge of translation motion (e.g., the right leading edge of the weld line 210 in FIGs. 4 and 5) for fusion uniformity that is not possible with known unoscillated laser cladding systems.

As previously noted the laser optical energy absorbed at any beam focus area varies proportionately with focus time duration. By non-limiting example laser beam 180 focus time duration and proportional absorbed energy can be varied in the following ways: (i) the laser beam 180 can be oscillated parallel to or side-to-side transverse (e.g., 211) the weld translation path 210; (ii) the oscillation or translation speed can be varied; and (iii) the laser power intensity dP or focus dF can be varied continuously or by pulse modulation. Thus by dynamically changing the rate of laser beam focus time duration the energy transfer rate to the substrate and filler is varied along the weld line translation path, so that uniform energy transfer is maintained within the entire weld, regardless of local topography variations.

As shown in FIGs. 4 and 5, a cladding layer may comprise a single raster linear weld 210 or a two-dimensional weld array of multiple adjoining linear welds 210-230. Translation directions for each pass may be sequentially reversed as shown. Oscillation directions for each pass may be purely transverse to the translation direction as 211, 221 and 231 for each pass 210, 220 and 230 respectively. Duration of oscillation against the side of previous passes may be increased to ensure fusion. Multiple cladding layers 200', 500, 600 may be applied on each other by sequentially alternating layers in directions in and out of FIG. 5, or even changing directions of translation to other than left to right e.g. to 90 degrees from left to right. All of these multi-dimensional rastering patterns require uniform distribution of filler material on the substrate surface in advance of or in conjunction with the laser beam focusing on the filler material and substrate. The distribution apparatus 300 facilitates uniform distribution of filler material on whatever variable size, multi-dimensional welding pattern "footprint" is required for a specific cladding operation.

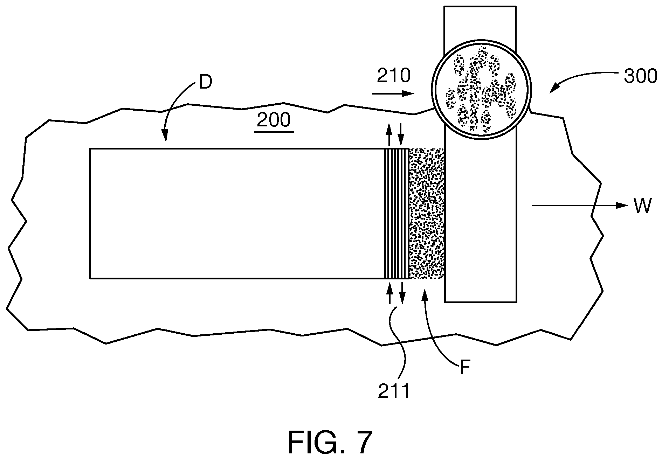

In FIGS. 6 and 7, the filler material distribution apparatus 300 is distributing powdered filler material F in advance of the laser beam 180 rastering pattern translation path 210 direction and the oscillation path 211 directional arrows of FIG. 5. In this case the filler distribution apparatus 300 is moving in tandem with the laser beam 180 in the direction of travel W. Alternatively the laser beam 180 and filler material distribution apparatus 300 can be held in fixed position relative to each other while the substrate 200 is moved in an opposite direction relative to the arrow W.

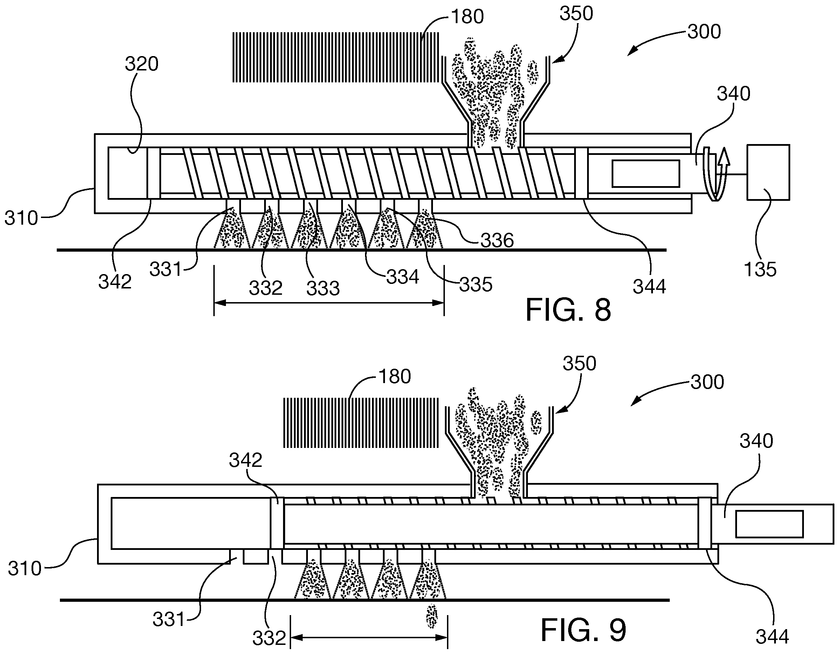

Examples of the filler material distribution apparatus 300 in accordance with the present invention are shown in FIGs. 8-10. The apparatus 300 has a housing 310 (here tubular) that defines an internal cavity 320 and a plurality of filler material distribution apertures 331-336 (hereafter referred to as "apertures") through which the filler material is discharged. While six apertures are shown, their array pattern and size may be selectively varied in order to provide a desired filler material distribution pattern. The aperture array pattern, for example may be a linear pattern, as shown in FIGs. 8-10 or any desired polygonal pattern, e.g. rectangular, trapezoidal, etc. A rotating auger 340 mechanical feed mechanism is mounted in the housing 310 and has front seal 342 and rear seal 344 that set limits for filler material axial flow. Thus filler distribution flow width is bounded by the maximum spread of the apertures 331 and 336. The auger 340 is rotated by distribution drive system 135 under control of the controller 170, and transfers filler material from the supply hopper 350 to the aperture array 331-336 without assistance of pressurized gas, or alternatively with assistance of a limited amount of pressurized gas that does not disrupt the desired or acceptable filler material distribution pattern. While inert gas may still be needed for oxidation isolation during the welding process, that gas can be supplied independently, for example within a welding isolation chamber. Lack of pressurized gas-assisted filler feed eliminates the potential for gas flow eddy currents to disrupt the filler material distribution uniformity or to cause filler clumping. Filler material feed rate may be varied by varying the auger 340 rotational speed. Gross feed rates can be varied by changing the distribution aperture 331-336 dimensions (to be described later herein). Gross feed rates can also be varied by changing the dimensions of the auger thread pattern.

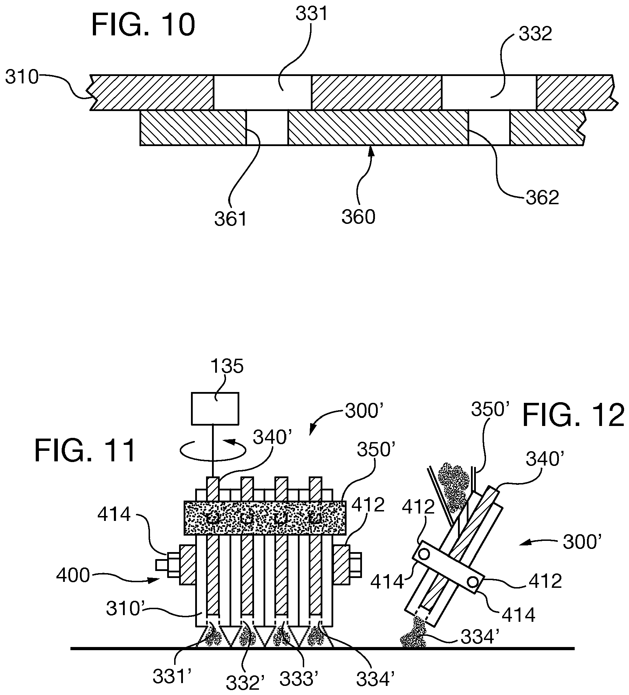

Filler distribution feed width is selectively varied by changing auger 340 axial position within the housing 310. Comparing FIGs. 8 and 9, the feed width is narrowed by isolating one or more apertures 331, 332 from the auger 340. The filler material distribution may also be varied by changing distribution aperture size, as shown in FIG. 10. Here an orifice plate 360, having apertures 361, 362, etc., covers the larger corresponding apertures 331, 332, etc., in the housing 310. Other aperture size-varying known mechanisms may be substituted for the orifice plate 360, including individually threaded orifices and adjustable shutters.

FIGs. 11 and 12 show a filler material distribution apparatus 300' that is not in accordance with the present invention but provides context for the present invention. The apparatus 300' has a modular housing 310' that facilitates selective assembly of varying distribution aperture arrays by coupling multiple housing modules to each other. Each module 310' has its own dedicated auger 340' that may be driven by individual drives 135 or multiple module augers can be driven by a single drive system 135. An advantage of individual auger 340' drive is the ability to vary filler distribution across a distribution width by varying drive speeds of individual augers, if for example it is desirable to apply a different filler powder thickness across the distribution width in apertures 331 '-334'. A common filler material hopper 350'can be utilized to feed all augers 340' or alternatively multiple hoppers may be employed. Other forms of conduits for filler material supply may be substituted for the hoppers.

The module housings 310' can be coupled to each other selectively by any known mounting structure 400, such as the exemplary clamps 412 and elongated threaded fasteners 414. Alternatively the mounting structure may be formed within the housings 310'.

## Claims

1. Apparatus (300) for laser cladding filler material distribution, comprising:
a housing (310) having an external surface defining an array of at least two distribution apertures (331-336) for controlled distribution of filler material (F) on a cladding substrate (200), and an internal chamber (320) in communication with the distribution apertures (331-336) adapted for retention of filler material (F) therein;
a mechanical feed mechanism (340) adapted for feeding filler material (F) from the internal chamber (320) through the distribution apertures (331-336) in the distribution aperture array; and
a feed mechanism drive system (135), coupled to the mechanical feed mechanism (340), adapted for selectively varying filler material feed rate,
**characterised in that** the mechanical feed mechanism (340) comprises a rotatable auger (340) mounted in the housing (310),
wherein the auger (340) has front and rear seals (342, 344) for limiting the flow of filler material (F) along the auger (340),
wherein the auger (340) is rotated by the feed mechanism drive system (135) under the control of a controller (170) and transfers filler material (F) from a supply hopper (350) to the distribution apertures (331-336),
wherein the width of feeding of the filler material (F) from the distribution apertures (331-336) is selectively variable by axial movement of the auger (340) within the housing (310), said axial movement narrowing or widening the feeding width by respectively isolating or deisolating one or more of the distribution apertures (331-336) from the auger (340).

2. The apparatus (300) of claim 1, comprising an aperture adjustment mechanism (360) for selectively varying distribution aperture dimensions.

3. The apparatus (300) of claim 1, the array of at least two distribution apertures (331-336) comprising a linear array of at least three distribution apertures (331-336).

4. The apparatus of claim 1, the array of at least two distribution apertures comprising a polygonal array of at least three distribution apertures.

5. A laser cladding system (100) comprising:
the apparatus (300) of claim 1;
a laser (140) generating a laser beam (180) for transferring optical energy to the substrate (200) and filler material (F) on the substrate (200) that fuses the filler material (F) to the substrate (200) as a filler layer;
a movable mirror (160) intercepting the laser beam (180), for orienting the laser beam (180) on the substrate (200); and
a laser drive system (170, 162, 164, 166) coupled to each of the respective movable mirror (160) and the laser (140) for causing relative motion between the laser beam (180) and the substrate (200).

6. The system (100) of claim 5, the laser drive system (170, 162, 164, 166) moving the mirror (160) so as to move the laser beam (180) in a multi-dimensional path (210, 211, 220, 221, 230, 231) across the substrate (200), the array of at least two distribution apertures (331-336) introducing a uniform distribution pattern of filler material (F) on the substrate (200) along the multidimensional path (210, 211, 220, 221, 230, 231) in advance of the laser beam (180) transferring optical energy to the substrate (200).

## Patentansprüche

1. Vorrichtung (300) zur Füllmaterialverteilung für ein Lauserauftragschweisssystem das Folgendes umfasst:
ein Gehäuse (310), das eine äußere Oberfläche, die eine Anordnung von wenigstens zwei Verteilungsöffnungen (331-336) für die kontrollierte Verteilung von Füllmaterial (F) auf einem Mantelsubstrat (200) definiert, und eine innere Kammer (320) aufweist, die in Verbindung mit den Verteilungsöffnungen (331-336) steht und für die Zurückhaltung von Füllmaterial (F) darin ausgelegt ist,
einen mechanischen Zuführmechanismus (340), der ausgelegt ist für die Zuführung von Füllmaterial (F) aus der inneren Kammer (320) durch die Verteilungsöffnungen (331-336) in die Verteilungsöffnungsanordnung und
ein mit dem mechanischen Zuführmechanismus (340) gekoppeltes Zuführmechanismus-Antriebssystem (135), das für das wahlweise Verändern der Materialzuführungsgeschwindigkeit ausgelegt ist,
**dadurch gekennzeichnet, dass**
der mechanische Zuführmechanismus (340) eine in dem Gehäuse (310) angebrachte drehbare Schnecke (340) umfasst,
wobei die Schnecke (340) vordere und hintere Dichtungen (342, 344) zum Begrenzen des Flusses von Füllmaterial (F) entlang der Schnecke (340) aufweist,
wobei die Schnecke (340) durch das Zuführmechanismus-Antriebssystem (135) unter der Steuerung einer Steuereinrichtung (170) gedreht wird und das Füllmaterial (F) von einem Vorratsbehältnis (350) zu den Verteilungsöffnungen (331-336) befördert,
wobei die Breite der Zuführung des Füllmaterials (F) von den Verteilungsöffnungen (331-336) wahlweise durch eine axiale Bewegung der Schnecke (340) innerhalb des Gehäuses (310) veränderlich ist, wobei die axiale Bewegung die Zuführungsbreite durch Isolieren bzw. Entisolieren von einer oder mehreren der Verteilungsöffnungen (331-336) von der Schnecke (340) verengt oder erweitert.

2. Vorrichtung (300) nach Anspruch 1, das einen Öffnungseinstellmechanismus (360) zum wahlweisen Verändern Abmessungen der Verteilungsöffnungen umfasst.

3. Vorrichtung (300) nach Anspruch 1, wobei die Anordnung von wenigstens zwei Verteilungsöffnungen (331-336) eine lineare Anordnung von wenigstens drei Verteilungsöffnungen (331-336) umfasst.

4. Vorrichtung nach Anspruch 1, wobei die Anordnung von wenigstens zwei Verteilungsöffnungen eine polygonale Anordnung von wenigstens drei Verteilungsöffnungen umfasst.

5. Lauserauftragschweisssystem (100), das Folgendes umfasst:
die Vorrichtung (300) nach Anspruch 1,
einen Laser (140), der einen Laserstrahl (180) zur Übertragung optischer Energie an das Substrat (200) und das Füllmaterial (F) auf dem Substrat (200) erzeugt, der das Füllmaterial (F) als eine Füllschicht auf das Substrat (200) aufschmilzt,
einen beweglichen Spiegel (160), der den Laserstrahl (180) abfängt, zum Ausrichten des Laserstrahls (180) auf das Substrat (200) und
ein mit jedem des beweglichen Spiegels (160) und des Lasers (140) gekoppeltes Laser-Antriebssystem (170, 162, 164, 166) zum Bewirken einer relativen Bewegung zwischen dem Laserstrahl (180) und dem Substrat (200).

6. System (100) nach Anspruch 5, wobei das Laser-Antriebssystem (170, 162, 164, 166) den Spiegel (160) bewegt, sodass der Laserstrahl (180) in einer mehrdimensionalen Bahn (210, 211, 220, 221, 230, 231) über das Substrat (200) bewegt wird, wobei die Anordnung von wenigstens zwei Verteilungsöffnungen (331-336) entlang der mehrdimensionalen Bahn (210, 211, 220, 221, 230, 231) vor dem Laserstrahl (180), der optische Energie auf das Substrat (200) überträgt, ein gleichmäßiges Verteilungsmuster von Füllmaterial (F) auf dem Substrat (200) einbringt.

## Revendications

1. Appareil (300) de distribution de matière d'apport pour rechargement par laser, comprenant :
un logement (310) comportant une surface externe définissant un arrangement d'au moins deux ouvertures de distribution (331-336) en vue de la distribution régulée de matière d'apport (F) sur un substrat (200) à recharger, et une chambre interne (320) communiquant avec les ouvertures de distribution (331-336), adaptée en vue d'y retenir de la matière d'apport (F) ;
un mécanisme (340) d'alimentation mécanique adapté en vue d'alimenter en matière d'apport (F), depuis la chambre interne (320), par les ouvertures de distribution (331-336), l'arrangement d'ouvertures de distribution, et
un système d'entraînement (135) de mécanisme d'alimentation, couplé au mécanisme (340) d'alimentation mécanique, adapté en vue de faire varier sélectivement le débit d'alimentation en matière d'apport,
**caractérisé en ce que** le mécanisme (340) d'alimentation mécanique comprend une tarière rotative (340) montée dans le logement (310),
étant entendu que la tarière (340) comporte des obturateurs avant et arrière (342, 344) pour limiter l'écoulement de matière d'apport (F) dans la tarière (340) ;
étant entendu que la tarière (340) est mise en rotation par le système d'entraînement (135) du mécanisme d'alimentation sous la commande d'une commande (170) et qu'elle transfère la matière d'apport (F) depuis une trémie d'amenée (350) jusqu'aux ouvertures de distribution (331-336) ;
étant entendu que la largeur de l'alimentation de la matière d'apport (F) depuis les ouvertures de distribution (331-336) est variable sélectivement par déplacement axial de la tarière (340) à l'intérieur du logement (310), ledit déplacement axial rétrécissant ou élargissant la largeur d'alimentation, respectivement, en isolant ou en désisolant une ou plusieurs des ouvertures de distribution (331-336) par rapport à la tarière (340).

2. Appareil (300) selon la revendication 1, comprenant un mécanisme (360) d'ajustement d'ouvertures servant à faire varier sélectivement les dimensions des ouvertures de distribution.

3. Appareil (300) selon la revendication 1, l'arrangement d'au moins deux ouvertures de distribution (331-336) consistant en un arrangement linéaire d'au moins trois ouvertures de distribution (331-336).

4. Appareil selon la revendication 1, l'arrangement d'au moins deux ouvertures de distribution consistant en un arrangement polygonal d'au moins trois ouvertures de distribution.

5. Système (100) de rechargement par laser comprenant :
l'appareil (300) selon la revendication 1 ;
un laser (140) produisant un faisceau laser (180) pour transférer de l'énergie optique au substrat (200) et à la matière d'apport (F) sur le substrat (200) qui fusionne la matière d'apport (F) avec le substrat (200) sous la forme d'une couche d'apport ;
un miroir mobile (160) interceptant le faisceau laser (180), pour orienter le faisceau laser (180) sur le substrat (200), et
un système d'entraînement (170, 162, 164, 166) de laser couplé à chaque élément respectif parmi le miroir mobile (160) et le laser (140) pour provoquer un mouvement relatif entre le faisceau laser (180) et le substrat (200).

6. Système (100) selon la revendication 5, le système d'entraînement (170, 162, 164, 166) de laser déplaçant le miroir (160) de sorte à déplacer le faisceau laser (180) sur un trajet multidimensionnel (210, 211, 220, 221, 230, 231) d'un bout à l'autre du substrat (200), l'arrangement d'au moins deux ouvertures de distribution (331-336) mettant en place un modèle uniforme de distribution de la matière d'apport (F) sur le substrat (200) le long du trajet multidimensionnel (210, 211, 220, 221, 230, 231) en précédant le faisceau laser (180) transférant de l'énergie optique au substrat (200).
